# EUROPEAN PATENT SPECIFICATION

(11) **EP 3 640 511 B1**
(45) Date of publication and mention of the grant of the patent: **13.03.2024**
(21) Application number: 18817848.7
(22) Date of filing: 12.06.2018
(51) Int. Cl.: F16L 11/10, F16L 11/115, B29C 53/82

(54) **COMPOSITE HOSE HAVING IMPROVED DURABILITY AND RESTORING FORCE**
VERBUNDSCHLAUCH MIT VERBESSERTER HALTBARKEIT UND RÜCKSTELLKRAFT
TUYAU COMPOSITE PRÉSENTANT UNE DURABILITÉ ET UNE FORCE DE RAPPEL AMÉLIORÉES

(30) Priority: 14.06.2017 KR 20170074589
(43) Date of publication of application: 22.04.2020
(73) Proprietor: Sangbong Corporation Co., Ltd., Pyeongtaek-si, Gyeonggi-do 17815 (KR)
(72) Inventor: KIM, Kyung Il, Seoul 06299 (KR); KIM, Hee Jin, Pyeongtaek-si Gyeonggi-do 17942 (KR); HWANG, Young Il, Pyeongtaek-si Gyeonggi-do 17939 (KR)
(74) Representative: dompatent von Kreisler Selting Werner - Partnerschaft von Patent- und Rechtsanwälten mbB
(86) International application number: PCT/KR2018/006667
(87) International publication number: WO 2018/230947

(56) References cited:
- EP-A1- 0 076 540
- WO-A1-2017/065276
- CA-A- 1 003 768
- JP-A- 2013 002 568
- KR-A- 20130 078 225
- KR-B1- 100 274 059
- KR-B1- 101 482 713
- US-A- 3 916 505
- US-A1- 2010 071 795

## Description

### [Technical Field]

The present invention relates to a composite hose having improved durability and restoring force.

### [Background Art]

When loading or unloading liquid cargo such as petrochemicals into or from a ship, a hose product that is convenient to use is generally used. Particularly, natural gas and petroleum gas are large in volume because they are normally in a gaseous state. Thus, after the natural gas and the petroleum gas are liquefied to be transformed into liquefied natural gas and liquefied petroleum gas in a liquid state that is small in volume, they are stored in a storage tank of the ship to be transported to a destination. At the destination, the liquefied natural gas and the liquefied petroleum gas are re-gasified to be used as fuel.

Fluid cargo such as the liquefied natural gas and the liquefied petroleum gas is transported using a composite hose. The composite hose should be rigid so that it can be used under high pressure conditions, and simultaneously should be flexible so that it can be wound for storage.

EP 0076540 A1 discloses a flexible hose for liquefied gases, comprising a tubular body of biaxially oriented polypropylene film arranged between an inner helically wound wire and an outer helically wound wire, said wires being wound at the same pitch but having the windings displaced by half a pitch widt from each other.

CA 1003768 A1 discloses a flexible hose comprising inner and outer helical coil reinforcements, the turns of one helical coil reinforcement lying between the turns of the other helical coil reinforcement, and two component layers free to Slip relative to each other upon flexing of the hose and located between the helical coil reinforcements so as to form a composite corrugated hose Body, the first component layer comprising overlapped plastics film, and the second component reinforcing layer comprising parallel filamentary reinforcement members supported by a layer of thin impregnatable open-structured non-woven matrix of a plurality of substantially randomly arranged filaments interconnected at their cross-over points.

US 3,916,505 discloses a process for the manufacture of hose or tube comprising: winding on a mandrel an inner wire coated with a material selected from the group consisting of fluorinated ethylene propylene copolymer and polytetrafluoroethylene, the convolutions of the winding being spaced apart; applying over the inner wire and the mandrel at least one layer of layflat tubing made of fluorinated ethylene propylene copolymer; applying over the layer of fluorinated ethylene propylene copolymer at least one layer of polypropylene fabric; applying over the layer of propylene fabric an outer cover of polypropylene fabric coated with polyvinyl chloride; and winding on an outer wire the turns of which are displaced half a pitch from the turns of the inner wire.

WO 2017065276A1 discloses a double hose comprising an inner pipe (10) made of soft resin and an outer pipe (11) made of soft resin, wherein between the inner pipe (10) and the outer pipe (11) Wherein said reinforcing core is fixed to said inner pipe and said outer pipe, said reinforcing core being spirally wound with a space therebetween, said reinforcing core being fixed to said inner pipe and said outer pipe, (14) loosely arranged along a space (13) between the reinforcing core (12) and the inner pipe (12, 12), and the wire material (14) (10) and the outer pipe (11) so as to be in close contact with each other.

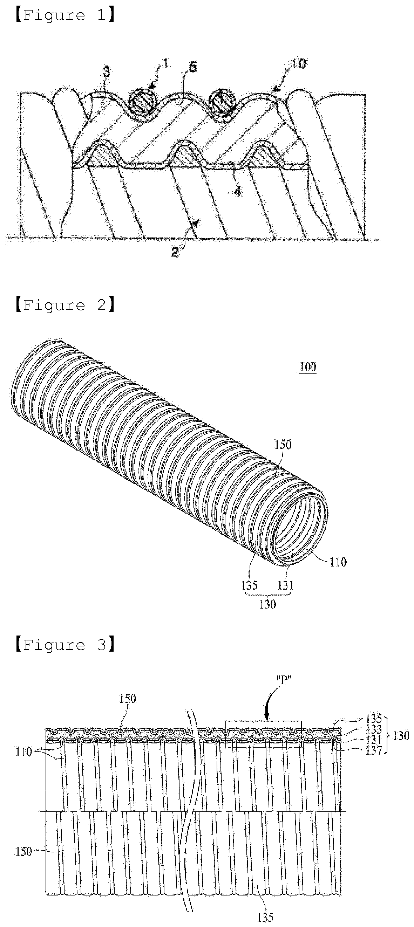

FIG. 1 is a diagram illustrating the internal construction of a conventional composite hose disclosed in Korean Patent Publication No. 10-0274059 (Dec. 15, 2000).

Referring to FIG. 1, the conventional composite hose 10 includes an inner spiral race 2 formed to have a triangular cross-section and wound spirally, an inner layer 4 formed to surround the inner spiral race 2, a laminate 3 formed to surround the inner layer 4 and made of a synthetic resin material, an outer layer 5 formed to surround the laminate 3, and an outer spiral race 1 wound spirally around an outer circumference of the outer layer 5 and having a circular cross-section. Fluid passes through the interior of the inner layer 4.

As the fluid flows into the composite hose 10 under strong pressure, friction is generated between the fluid and the inner spiral race 2. Due to the continuous friction with the fluid, pitches of the inner spiral race 2 arranged at regular intervals may be varied for each region. That is, the pitches of the inner spiral race 2 may be widened in some regions, while the pitches of the inner spiral race 2 may be narrowed in other local regions. The inner spiral race 2 supports the inner layer 4, the outer layer 5, and the outer spiral race 1 wound thereon. If the pitches of the inner spiral race 2 are widened, the inner layer 4 and the outer layer 5 are dented, thus leading to damage to the hose.

Furthermore, in a working environment for moving the natural gas or the like, the composite hose 10 may be repeatedly bent and stretched by a worker. If the pitches of the inner spiral race 2 are not uniform, the frequent bending and stretching may cause the pitches of the inner spiral race 2 to be more easily widened, and consequently the composite hose 10 may be dented and damaged. The damage to the composite hose 10 may cause flammable fluid flowing therein to leak out, and may lead to an enormous mortality event together with explosion in the event of a fire.

Korean Patent Publication No. 10-0274059 uses the triangular inner spiral race 2 to keep the pitches of the inner spiral race 2 uniform. That is, if the inner spiral race 2 of the triangular shape is used, the inner spiral race 2 and the inner layer 4 forming the inner surface along which fluid flows become flat, thus minimizing a change in pitches of the inner spiral race 2 and consequently enhancing reliability.

However, the triangular inner spiral race of Korean Patent Publication No. 10-0274059 is problematic in that spirals of the inner spiral race may be slightly rotated by the repeated bending and stretching in the working environment, so that the hose may be subjected to larger friction when the fluid flows therein, thus causing a change in pitches of the inner spiral race. Furthermore, the triangular inner spiral race may lead to damage to the inner layer 4 in an edge region of the inner layer 4.

### [Disclosure]

### [Technical Problem]

Accordingly, the present invention has been made keeping in mind the above problems occurring in the related art, and is intended to provide a composite hose.

Furthermore, the present invention provides a composite hose having improved durability and restoring force.

### [Technical Solution]

In order to accomplish the above-described objects, the present invention provides a composite hose as defined in claim 1. Preferred embodiments are reflected in the dependent claims.

### [Advantageous Effects]

A composite hose according to the present embodiment has a coating layer formed to surround a spirally wound inner wire, and has a strap provided in a region of the coating layer between inner wires adjacent to each other. In addition, the strap supports the coating layer toward the center of the coating layer. Therefore, since the coating layer is prevented from being longitudinally extended, the surface of the inner wire facing the center of the coating layer is prevented from being located on the same line as the inner surface of the coating layer, thereby preventing the inner wire from being separated from the coating layer such that the durability of the composite hose can be improved.

In addition, a result of a tensile strength test shows that the composite hose according to the present embodiment has greater elastic force than a conventional composite hose, thereby having excellent restorability.

### [Description of Drawings]

FIG. 1 is a view illustrating a conventional composite hose.
FIG. 2 is a perspective view of a composite hose according to an embodiment of the present invention.
FIG. 3 is a side sectional view of FIG. 2.
FIG. 4 is an enlarged view illustrating portion "P" of FIG. 3.
FIG. 5 is a partially exploded perspective view of a manufacturing apparatus for manufacturing a composite hose according to an embodiment of the present invention.
FIGS. 6 and 7 show a state where the manufacturing apparatus shown in FIG. 5 is expanded, and are a front sectional view and a plan sectional view of FIG. 5.
FIGS. 8 and 9 show a state where the manufacturing apparatus shown in FIG. 5 is contracted, and are a front sectional view and a plan sectional view of FIG. 5.

### [Best Mode]

It should be noted that like reference numerals are used to identify like elements throughout different drawings.

Meanwhile, the meaning of terms described herein should be understood as follows.

As used herein, the singular forms "a", "an", and "the" are intended to include plural forms as well, unless the context clearly indicates otherwise. The ordinal numerals "first", "second", etc. are used only for distinguishing one component from another component, and are not intended to limit the scope of the invention.

It is to be understood that the terms "comprises" and/or "comprising", or "includes" and/or "including" when used in this specification, specify the presence of stated features, numbers, steps, operations, elements, components, and/or combinations thereof, but do not preclude the presence or addition of one or more other features, numbers, steps, operations, elements, components, and/or combinations thereof.

The term "at least one" should be understood to include all combinations which may be presented from one or more related items. For example, "at least one of the first item, the second item, and the third item" means the first item, the second item, and the third item as well as all combinations which may be presented from two or more of the first item, the second item, and the third item.

The term "and/or" should be understood to include all combinations which may be presented from one or more related items. For example, "the first item, the second item, and the third item" means the first item, the second item, and the third item as well as all combinations which may be presented from two or more of the first item, the second item, and the third item.

When the term "couple" or "connect" is used in the following description, it is intended to mean not only "directly coupled or connected to" but also "indirectly coupled or connected to" such as connected through another intervening element. Meanwhile, when the expression "an element is directly connected or installed to another element" is used herein, it should be understood that there is no intervening element between them. The same applies to expressions showing a relationship between elements, namely, "between elements" and "directly between elements", or "adjacent to an element" and "directly adjacent to an element".

Hereinafter, the composite hose having improved durability and restoring force according to the embodiment of the present invention will be described in detail with reference to the accompanying drawings.

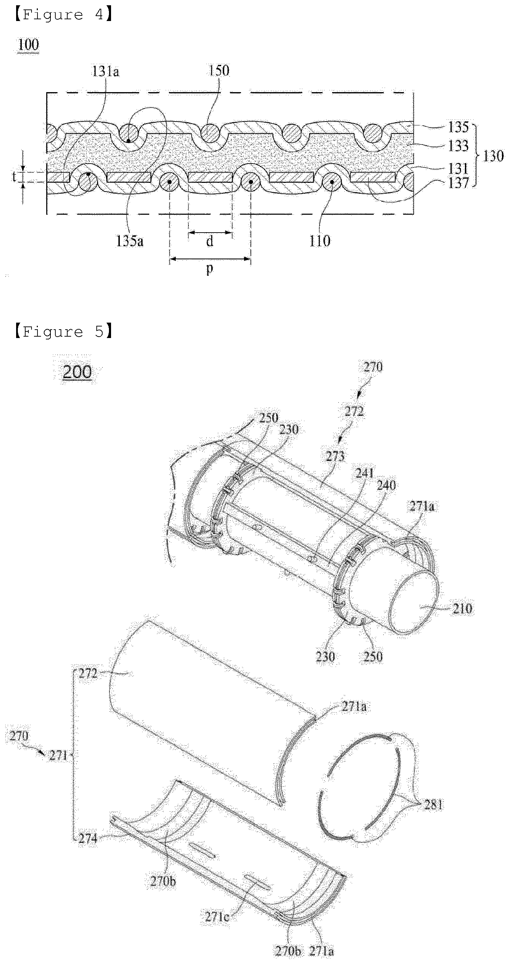

FIG. 2 is a perspective view of the composite hose according to the embodiment of the present invention, FIG. 3 is a side sectional view of FIG. 2, and FIG. 4 is an enlarged view illustrating portion "P" of FIG. 3.

As illustrated in the drawings, the composite hose 100 according to the present embodiment may use to transport fluid cargo such as liquefied natural gas or liquefied petroleum gas. Since the composite hose 100 according to the present embodiment should be used under high pressure conditions and be wound for storage, the hose should be rigid and simultaneously flexible to allow it to be repeatedly bent and stretched by a worker.

To this end, the composite hose 100 according to the present embodiment may include an inner wire 110, a coating layer 130, and an outer wire 150.

The inner wire 110 may be spirally wound, and may function as an inner core of the composite hose 100 according to the present embodiment. The inner wire 110 may be spirally wound around an outer circumference of a cover 270 (see FIGS. 5 to 9) of a manufacturing apparatus 200 to retain its shape, and may be formed of a carbon fiber material, a synthetic resin material, or a metal material.

The coating layer 130 may be formed to surround the inner wire 110, and may include an inner cover layer 131, a reinforcing layer 133, and an outer cover layer 135.

In detail, the inner cover layer 131 may be formed to surround the inner wire 110, and may be formed of a film, fabric, or the like of a synthetic resin material. The inner cover layer 131 may have impermeability to prevent fluid from being permeated and may have fire resistance to withstand flames.

The reinforcing layer 133 may be formed to surround the inner cover layer 131, and may enable the composite hose 100 according to the present embodiment to have both rigidity and ductility. Furthermore, the reinforcing layer 133 may be formed of a fabric.

The outer cover layer 135 may be formed to surround the reinforcing layer 133, and may be formed of a synthetic resin material or a rubber material. The outer cover layer 135 may function as the cover of the composite hose 100 according to the present embodiment.

The outer wire 150 may be wound spirally around the outer cover layer 135, and may be formed of a carbon fiber material, a synthetic resin material, or a metal material. The outer wire 150 may function as an outer core of the composite hose 100 according to the present embodiment.

Since each of the inner wire 110 and the outer wire 150 has a predetermined tension, the inner wire 110 may be shaped such that at least a portion thereof is embedded in the inner surface of the coating layer 130, and the outer wire 150 may be shaped such that at least a portion thereof is embedded in the outer surface of the coating layer 130. That is, seating grooves 131a and 135a are formed on the inner surface and the outer surface of the coating layer 130 so that the inner wire 110 and the outer wire 150 are seated therein. Thus, the coating layer 130 may retain its position and state without moving.

Since the coating layer 130 is flexible, it may be extended/contracted and bent/stretched depending on the form of the transported fluid, the fluid pressure, and the environment where the hose is used. If the coating layer 130 is longitudinally extended, the height of the seating groove 131a facing a radial direction of the coating layer 130 is reduced. Then, the inner surface of the coating layer 130 may be located on the same line as the surface of the inner wire 10 facing the outer surface of the coating wire 130. In such a state, the inner wire 110 may move, so that pitches may be varied for each region of the inner wire 110. In this case, since a portion of the coating layer 130 located at the region of the inner wire 110 having the wide pitch is not supported by the inner wire 110, the coating layer 130 may be dented towards the center thereof.

The composite hose 100 according to the present embodiment may suppress the coating layer 130 from being longitudinally extended, thus preventing the surface of the inner wire 110 facing the outer surface of the coating layer 130 from being located on the same line as the inner surface of the coating layer 130.

To this end, the coating layer 130 may further include a strap 137. The strap 137 may support the coating layer 130 towards the center of the coating layer 130 (from an inside of the hose outwards). To be more specific, the strap 137 may be spirally wound between adjacent inner wires 110, and the region of the coating layer 130 around which the strap 137 is wound may be supported towards the center of the coating layer 130 by the tension of the strap 137. It is natural that a portion between the adjacent inner wires 110 means the pitch of the inner wire 110.

The strap 137 may be formed of polyamide fabric to surround the inner cover layer 131, but the invention is not limited thereto. The strap may be surrounded by the reinforcing layer 133, and the strap 137 may be preferably made of the same material as the inner cover layer.

Furthermore, the pitch P of the inner wire 110 and the width d of the strap 137 may be variously changed depending on the size of the composite hose 100. For example, if the pitch P of the inner wire 110 ranges from 29 to 31mm, the width d of the strap 137 may be in the range of 15 to 17mm to minimize friction with the fluid flowing therein and thereby minimize a change in pitch. In addition, if the pitch P of the inner wire 110 ranges from 29 to 31mm, the thickness t of the strap is preferably in the range of 0.7 to 0.9mm, without being limited thereto. If the thickness t of the strap is less than 0.7mm, the tension of the strap is weak, so that a change in pitch of the inner wire 110 is likely to occur. Meanwhile, if the thickness is more than 0.9mm, the flexibility of the composite hose may be reduced. The outer wire 150 may be formed at a location corresponding to that of the strap 137 to surround the strap 137.

The composite hose 100 according to the present embodiment is configured such that the strap 137 is installed in the region of the coating layer 130 between adjacent inner wires 110, and the strap 137 supports the coating layer 130 towards the center of the coating layer 130. Then, since the coating layer 130 is suppressed from being longitudinally extended, the surface of the inner wire 110 facing the outer surface of the coating layer 130 is prevented from being located on the same line as the inner surface of the coating layer 130. Thus, since the inner wire is prevented from being separated from the coating layer, the durability of the composite hose 110 is improved.

The results of a hydrostatic test, a burst test, and a stiffness test on the composite hose 100 according to the present embodiment will be described.

### Hydrostatic Test

Leakage and elongation were measured by maintaining hydraulic pressure, which was 1.5 times as high as maximum working pressure, for 5 minutes in the composite hose 100 according to the present embodiment and the conventional composite hose.

According to the test result, both the composite hose 100 according to the present embodiment and the conventional composite hose had no leakage. However, the length of the composite hose 100 according to the present embodiment was elongated by 3.14% from 2,041mm that is an original length to 2,105mm, while the length of the conventional composite hose was elongated by 3.9% from 2,165mm that is an original length to 2, 250mm.

Since the composite hose 100 according to the present embodiment was reduced in the elongation of length due to the strap 137, it can be seen that the seating groove 131a of the coating layer 130 is less elongated longitudinally than the coating layer 130. In that case, since the height of the seating groove 131a facing the radial direction of the coating layer 130 is less reduced, the inner wire 110 may be securely inserted and supported in the seating groove 131a.

### Burst Test

Pressure at which each of the composite hose 100 according to the present embodiment and the conventional composite hose bursts was measured.

According to the test result, in the composite hose 100 according to the present embodiment, the inner wire 110 was separated at 54.0 bar. However, in the conventional composite hose, the inner wire was separated at 52.3 bar. Thus, it can be seen that the composite hose 100 according to the present embodiment has more excellent rigidity than the conventional composite hose. In the same pressure range, the composite hose according to the present embodiment is configured such that the strap functions to increase a contact force between the inner cover layer and the reinforcing layer and to suppress the inner wire and the inner cover layer from being separated from original positions thereof, thus maintaining the intact interior shape of the composite hose. Conversely, it is confirmed that the conventional composite hose does not withstand internal pressure and is dented towards the interior of the hose, thus causing severe deformation.

### Stiffness Test

After the composite hose 100 according to the present embodiment and the conventional composite hose were vertically fixed and connected to a load cell, they were vertically pulled. Subsequently, changes in tensile load and appearance resulting from the change in length were measured.

According to the test result, the composite hose 100 according to the present embodiment was smaller in the length change than the conventional composite hose under the same force. When the same test was repeated, the composite hose 100 according to the present embodiment had excellent restorability due to excellent elastic force.

When the composite hose 100 according to the present embodiment is manufactured, the pitches P of the inner wire 110 should be uniform. To this end, the inventors have developed the manufacturing apparatus 200 for manufacturing the composite hose 100 according to the present embodiment. This will be described with reference to FIGS. 5 to 7.

As shown in the drawings, the manufacturing apparatus 200 may include a mandril 210, a support frame 230, a roller 250, and a cover 270.

The mandril 210 may be formed in the shape of a hollow cylinder and then rotatably installed.

The support frame 230 may be formed in the shape of a ring and installed to the outer circumference of the mandril 210 in a circumferential direction of the mandril 210. Two or more support frames 230 may be installed and be rotatable along with the mandril 210.

The roller 250 may be installed to each support frame 230. A plurality of rollers may be installed to each support frame 230. Furthermore, a side of the roller 250 may protrude to the outside of the support frame 230.

The cover 270 may be formed in the shape of a cylinder corresponding to the shape of the mandril 210, may be installed to surround the mandril 210, and may be concentric with the mandril 210. Moreover, the inner circumference of the cover 270 is in contact with the outer circumference of the roller 250, and the composite hose 100 that is to be formed is wound around the outer circumference of the cover 270. Since the inner circumference of the cover 270 is in contact with and supported by the outer circumference of the roller 250, the cover 270 moves along with the mandril 210.

The transverse direction of the roller 250 is perpendicular to the longitudinal direction of the mandril 210. Thus, if the roller 250 rotates, the roller 250 may move from one end to the other end of the mandril 210 in the longitudinal direction thereof, or may move from the other end to one end in the longitudinal direction of the mandril 210.

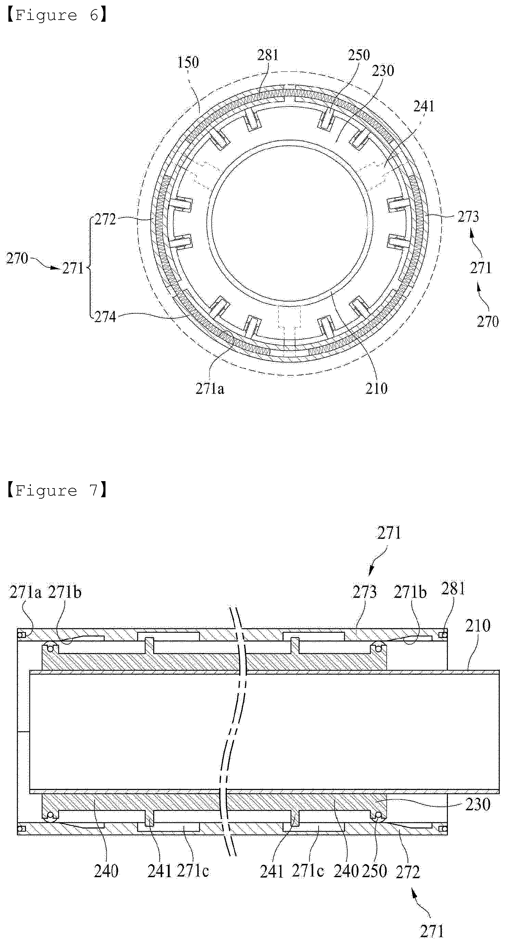

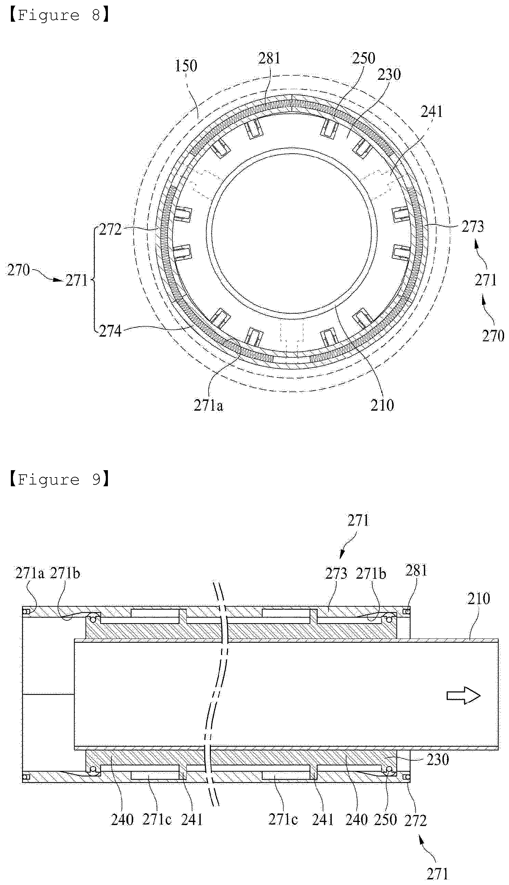

When the mandril 210 moves in its longitudinal direction to move the roller 250, the region of the inner circumference of the cover 270 coming into contact with the outer circumference of the roller 250 is changed. Since the region of the inner circumference of the cover 270 coming into contact with the roller 250 as it moves is changed, the cover 270 may be expanded outwards from the center of the mandril 210 (see FIG. 6), or may be contracted towards the center of the mandril 210 (see FIG. 8). That is, the cover 270 may be expanded in the shape of increasing a diameter, and may be contracted in the shape of reducing the diameter.

In detail, the cover 270 may include a plurality of arc-shaped cover pieces 271 that are identically formed. In the drawing, an example where the cover pieces 271 have a first cover piece 272, a second cover piece 273, and a third cover piece 274 is illustrated.

Both ends of each of the first cover piece 272 to the third cover piece 274 are arranged in the longitudinal direction of the cover 270, and both sides of each of the first cover piece 272 to the third cover piece 274 are arranged in the circumferential direction of the cover 270. Thus, the side of the first cover piece 272 and the side of the second cover piece 273, the side of the second cover piece 273 and the side of the third cover piece 274, and the side of the third cover piece 274 and the side of the first cover piece 272, which are adjacent to each other, face each other.

Elastic members 281 may be installed, respectively, at both ends of each of the first cover piece 272 to the third cover piece 274. One end of each elastic member 281 may be installed to be supported by each of the first cover piece 272, the second cover piece 273, and the third cover piece 274, among the first cover piece 272 and the second cover piece 273, the second cover piece 273 and the third cover piece 274, and the third cover piece 274 and the first cover piece 272, which are adjacent to each other, while the other end may be installed to be supported by each of the second cover piece 273, the third cover piece 274, and the first cover piece 272. Thereby, each elastic member 281 may elastically support such that the side of the first cover piece 272 and the side of the second cover piece 273, the side of the second cover piece 273 and the side of the third cover piece 274, and the side of the third cover piece 274 and the side of the first cover piece 272, which are adjacent to each other, come into contact with each other.

If the cover pieces 271 are pushed out of the cover 270 by the external force that is larger than the elastic force of the elastic member 281, so that the side of the first cover piece 272 and the side of the second cover piece 273, the side of the second cover piece 273 and the side of the third cover piece 274, and the side of the third cover piece 274 and the side of the first cover piece 272 are not in contact with each other (see FIG. 6), the diameter of the cover 270 is increased and the cover 270 is expanded.

Furthermore, since the side of the first cover piece 272 and the side of the second cover piece 273, the side of the second cover piece 273 and the side of the third cover piece 274, and the side of the third cover piece 274 and the side of the first cover piece 272 are in contact with each other by the elastic member 281 (see FIG. 8), the diameter of the cover 270 is reduced and the cover 270 is contracted.

Support grooves 271a may be formed on both ends of the cover piece 271 to support the elastic member 281 and thereby allow it to be stably installed.

As described above, as the roller 250 moves and the region of the inner circumference of the cover 270 coming into contact with the roller 250 is changed, the cover 270 is contracted and expanded. This will be described below.

An inclined surface 271b whose inner radius is linearly changed in the longitudinal direction of the cover 270 may be formed on the inner circumference of the cover 270 at which the roller 250 is located, and the roller 250 may be in contact with the inclined surface 271b. The inclined surface 271b may be gradually depressed from the inner circumference to the outer circumference of the cover 270, and the region of the cover 270 on which the inclined surface 271b is formed has a different thickness.

Thus, if the roller 250 comes into contact with the thick region of the inclined surface 271b of the cover 270 by the movement of the mandril 210 (see FIG. 7), the cover 270 may be expanded by the roller 250 that pushes the cover piece 271 outwards (see FIG. 6). Meanwhile, if the roller 250 comes into contact with the thin region of the inclined surface 271b of the cover 270 (see FIG. 9), the cover 270 may be contracted by the elastic force of the elastic member 281 (see FIG. 8).

The roller 250 is moved by the mandril 210. Thus, if the moving distance of the mandril 210 is limited, the moving distance of the roller 250 is limited, so that the roller 250 may move only in the vicinity of the inclined surface 271b.

In order to limit the moving distance of the mandril 210, a locking slot 271c having a predetermined length in the longitudinal direction of the cover 270 may be formed on the inner circumference of the cover piece 271 of the cover 270. The support frame 230 and the support frame 230 which are adjacent to each other may be connected to each other by a plurality of connecting bars 240, and a stopper 241 may be formed on each connecting bar 240 to be inserted into the locking slot 271c.

Thus, if the mandril 210 is moved such that the roller 250 comes into contact with the thick region of the inclined surface 271b of the cover 270 (see FIG. 7), the cover piece 271 overcomes the elastic force of the elastic member 281 by the roller 250 and moves outwards from the center of the cover 270. Hence, since the sides of the cover pieces 271, which are adjacent to each other, are not in contact with each other, the cover 270 is expanded (see FIG. 6).

If the cover 270 is expanded, the inner wire 110 is spirally wound around the outer circumference of the cover 270 while rotating the mandril 210, and the inner cover layer 131, the strap 137, the reinforcing layer 133, and the outer cover layer 135 are sequentially wound to surround the inner wire 110, thus forming the coating layer 130. Thereafter, the outer wire is spirally wound around the outer circumference of the reinforcing layer, thus manufacturing the composite hose 100.

Subsequently, if the composite hose 100 has been manufactured, the mandril 210 is moved such that the roller 250 comes into contact with the thin region of the inclined surface 271b of the cover 270 (see FIG. 9). Then, since the cover piece 271 is moved towards the center of the cover 270 by the elastic force of the elastic member 281, sides of adjacent cover pieces 271 come into contact with each other. Therefore, the cover 270 is contracted (see FIG. 8).

When the cover 270 has been contracted, as illustrated in FIG. 8, a gap is formed between the inner circumference of the composite hose 100 and the outer circumference of the cover 270, so that it is possible to easily take the composite hose 100 out from the cover 270.

That is, since it is possible to separate the inner wire 110 and the inner cover layer 131 of the composite hose 100 from the cover 270 without any friction, the pitches P of the inner wire 110 may be uniform.

Although the preferred embodiments of the present invention have been disclosed for illustrative purposes, those skilled in the art will appreciate that various modifications, additions and substitutions are possible, without departing from the scope of the invention as disclosed in the accompanying claims. Therefore, it is to be understood that the scope of the invention is determined by the appended claims, and all changes falling within bounds of the claims are intended to be embraced by the claims.

### [Description of reference numerals of important parts]

| | | | |
|---|---|---|---|
| 110: | inner wire | | |
| 130: | coating layer | 131: | inner cover layer |
| 131a, 135a: | seating groove | | |
| 133: | reinforcing layer | 135: | outer cover layer |
| 137: | strap | | |
| 150: | outer wire | | |
| 200: | manufacturing apparatus | | |
| 210: | mandril | 230: | support frame |
| 240: | connecting bar | 250: | roller |
| 270: | cover | 271: | cover piece |
| 272: | first cover piece | 273: | second cover piece |
| 274: | third cover piece | | |

## Claims

1. A composite hose (100) comprising a spirally wound inner wire (110); a coating layer (130) formed to surround the inner wire (110); and an outer wire (150) wound spirally around an outer circumference of the coating layer (130), **characterized in that** the coating layer (130) comprises an inner cover layer (131) formed to surround the inner wire (110) and thereby form seating grooves (131a) on an inner surface to seat the inner wire (110); a reinforcing layer (133) formed to surround the inner cover layer (130); and an outer cover layer (135) formed to surround the reinforcing layer (133), with the outer wire (150) being wound thereon,
wherein the coating layer (130) comprises a strap (137) which is placed between the inner cover layer (131) and the reinforcing layer (133) and is wound spirally between inner wires (110) adjacent to each other and is formed to surround the inner cover layer (131), wherein the strap (137) supports the inner cover layer (131) to prevent the inner wire (110) from being separated from the inner cover layer (131).

2. The composite hose (100) of claim 1, wherein the inner wire (110) has a pitch of 29 to 31mm, and the strap (137) has a width of 15 to 17mm and a thickness of 0.7 to 0.9mm.

3. The composite hose (100) of claim 1, wherein the strap (137) is formed of polyamide fabric

4. The composite hose (100) of claim 1, wherein the outer wire (150) is formed at a position corresponding to that of the strap (137).

## Patentansprüche

1. Zusammengesetzter Schlauch (100), umfassend einen spiralförmig gewickelten inneren Draht (110); eine Beschichtungsschicht (130), die so ausgebildet ist, dass sie den inneren Draht (110) umgibt; und einen äußeren Draht (150), der spiralförmig um einen äußeren Umfang der Beschichtungsschicht herum (130) gewickelt ist, **dadurch gekennzeichnet, dass** die Beschichtungsschicht (130) Folgendes umfasst: eine innere Deckschicht (131), die so ausgebildet ist, dass sie den inneren Draht (110) umgibt und dadurch Aufnahmenuten (131a) auf einer inneren Fläche bildet, um den inneren Draht (110) aufzunehmen; eine Verstärkungsschicht (133), die so ausgebildet ist, dass sie die innere Deckschicht (130) umgibt; und eine äußere Deckschicht (135), die so ausgebildet ist, dass sie die Verstärkungsschicht (133) umgibt, wobei der äußere Draht (150) darauf gewickelt ist,
wobei die Beschichtungsschicht (130) einen Riemen (137) umfasst, der sich zwischen der inneren Deckschicht (131) und der Verstärkungsschicht (133) befindet und spiralförmig zwischen inneren Drähten (110), die einander benachbart sind, gewickelt ist und so ausgebildet ist, dass sie die innere Deckschicht (131) umgibt, wobei der Riemen (137) die innere Deckschicht (131) stützt und dadurch verhindert, dass der innere Draht (110) von der inneren Deckschicht (131) getrennt wird.

2. Zusammengesetzter Schlauch (100) gemäß Anspruch 1, wobei der innere Draht (110) einen Abstand von 29 bis 31 mm aufweist und der Riemen (137) eine Breite von 15 bis 17 mm und eine Dicke von 0,7 bis 0,9 mm aufweist.

3. Zusammengesetzter Schlauch (100) gemäß Anspruch 1, wobei der Riemen (137) aus Polyamidgewebe besteht.

4. Zusammengesetzter Schlauch (100) gemäß Anspruch 1, wobei der äußere Draht (150) auf einer Position gebildet ist, die derjenigen des Riemens (137) entspricht.

## Revendications

1. Tuyau composite (100), comprenant un fil intérieur (110) enroulé en spirale, une couche de revêtement (130) formée pour entourer ledit fil intérieur (110), et un fil extérieur (150) enroulé en spirale autour de la circonférence extérieure de la couche de revêtement (130), **caractérisé en ce que** ladite couche de revêtement (130) comprend une couche de couverture intérieure (131) formée pour entourer ledit fil intérieur (110), et pour ainsi former des rainures de réception (131a) sur une surface intérieure pour recevoir le fil intérieur (110), une couche de renforcement (133) formée pour entourer ladite couche de couverture intérieure (130), et une couche de couverture extérieure (135) formée pour entourer ladite couche de renforcement (133), ledit fil extérieur (150) étant enroulé dessus,
dans lequel ladite couche de revêtement (130) comprend une sangle (137) qui est placée entre ladite couche de couverture intérieure (131) et ladite couche de renforcement (133), et est enroulée en spirale entre des fils intérieurs (110) adjacents les uns aux autres, et est formée pour entourer ladite couche de couverture intérieure (131), dans lequel ladite sangle (137) supporte ladite couche de couverture intérieure (131) pour empêcher ledit fil intérieur (110) d'être séparé de ladite couche de couverture intérieure (131).

2. Tuyau composite (100) selon la revendication 1, dans lequel ledit fil intérieur (110) présente un pas de 29 à 31 mm, et ladite sangle (137) présente une largeur de 15 à 17 mm et une épaisseur de 0,7 à 0,9 mm.

3. Tuyau composite (100) selon la revendication 1, dans lequel ladite sangle (137) est en tissu de polyamide.

4. Tuyau composite (100) selon la revendication 1, dans lequel ledit fil extérieur (150) est formé sur une position correspondant à celle de la sangle (137).
